# EUROPÄISCHE PATENTSCHRIFT

(11) **EP 0 598 280 B1**
(45) Veröffentlichungstag und Bekanntmachung des Hinweises auf die Patenterteilung: **16.09.1998**
(21) Anmeldenummer: 93117777.8
(22) Anmeldetag: 03.11.1993
(51) Int. Cl.: C09D 133/00, C09D 163/00, C09D 167/00, C08F 8/16, C08G 63/60

(54) **Bindemittelzusammensetzung, diese enthaltende Überzugsmittel, deren Herstellung und Verwendung**
Binder composition, coating containing it, its preparation and its use
Composition de liant, revêtement la contenant, leur préparation et utilisation

(30) Priorität: 07.11.1992 DE 4237658
(43) Veröffentlichungstag der Anmeldung: 25.05.1994
(73) Patentinhaber: Herberts Gesellschaft mit beschränkter Haftung, 42285 Wuppertal (DE)
(72) Erfinder: Bederke, Klaus, Dr., D-45549 Sprockhövel (DE); Duecoffré, Volker, D-42119 Wuppertal (DE); Flosbach, Carmen, Dr., D-42115 Wuppertal (DE); Frigge, Eva, Dr., D-44789 Bochum (DE); Schubert, Walter, Dr., D-42349 Wuppertal (DE); Herrmann, Friedrich, D-42117 Wuppertal (DE)
(74) Vertreter: Türk, Gille, Hrabal, Leifert

(56) Entgegenhaltungen:
- EP-A- 0 119 051
- EP-A- 0 211 625
- US-A- 4 082 816
- US-A- 4 501 829
- PATENT ABSTRACTS OF JAPAN vol. 11, no. 43 (C-402)7. Februar 1987 & JP-A-61 209 278 (NIPPON PAINT CO LTD) 17. September 1986

## Beschreibung

Die Erfindung betrifft Bindemittelzusammensetzungen, die zur Herstellung von Überzugsmitteln geeignet sind, die bei erhöhter Temperatur eingebrannt werden und insbesondere zur Herstellung von Mehrschichtlackierungen, beispielsweise auf dem Kraftfahrzeugsektor, geeignet sind.

Aus der DE-A-30 22 996 ist ein Einbrennlack bekannt, bei dem man carboxylgruppenhaltige Polymere, wie z. B. Acrylate auf Basis Acrylsäure oder Methacrylsäure und glycidylgruppenhaltiger Acrylate zu einer härtbaren Zusammensetzung vermischt sind.

In der WO 84/00771 ist ein Mehrkomponentensystem beschrieben, bei dem vier Bindemitteltypen miteinander vermischt und dann appliziert werden. Bei den Komponenten handelt es sich um hydroxylgruppenhaltiges Acrylat, Säureanhydrid, wobei mindestens 50 % Alkylhexahydrophthalsäureanhydride sind, Epoxidharz und Melaminharz. Die Systeme weisen einen hohen Festkörpergehalt auf.

In der DE-A-23 33 384 wird ein Bindemittel auf der Basis acrylierter Polyester beschrieben, die durch Polymerisation eines hydroxylgruppenhaltigen Acrylates in einem hydroxylgruppenhaltigen Polyester oder Alkydharz erhalten werden. Die Vernetzung kann mit Melaminharzen und gleichzeitig Epoxidharzen durchgeführt werden.

In der DE-A-38 00 389 wird die Modifizierung von hydroxylgruppenaufweisenden Copolymerisaten mit Lactonen beschrieben, insbesondere mit ε-Caprolacton.

Die bekannten Überzugsmittel führen teilweise zu Filmen mit hoher Härte und guter Wetterbeständigkeit. Jedoch genügen sie den ständig steigenden Anforderungen an hohe Säurebeständigkeit und Lösemittelresistenz nicht.

Aufgabe der Erfindung ist die Bereitstellung eines Bindemittelsystems, das zu Überzugsmitteln verarbeitet werden kann, die bei erhöhter Temperatur eingebrannt werden können und zu Überzügen mit guter Härte, guter Wetterbeständigkeit und hoher Elastizität führen, die zudem säurebeständig und lösemittelresistent sind. Die Überzugsmittel sollen eine gute Applikationssicherheit (verringerte Ablaufneigung) auch bei hohen Schichtstärken aufweisen.

Es hat sich gezeigt, daß diese Aufgabe gelöst werden kann durch eine Bindemittelzusammensetzung, die einen Gegenstand der Erfindung darstellt und die enthält:
A) 25 bis 75 Gew.% des Umsetzungsproduktes eines oder mehrerer carboxyfunktionalisierter Poly(meth)acrylcopolymerer und/oder eines oder mehrerer carboxyfunktionalisierter Polyester, jeweils mit einer Säurezahl von 15 bis 200 mg KOH/g, mit einem oder mehreren Lactonen,
B) 25 bis 75 Gew.% eines oder mehrerer epoxidfunktionalisierter Vernetzer mit mindestens zwei Epoxidfunktionen im Molekül, mit einem Zahlenmittel des Molgewichtes (Mn) von 200 bis 10000 g/mol,
C) 0 bis 50 Gew.% eines oder mehrerer Polyole mit mindestens zwei Hydroxylfunktionen im Molekül,
D₁) 0 bis 20 Gew.% eines oder mehrerer Melaminharze,
D₂) 0 - 40 Gew.% eines oder mehrerer verkappter Polyisocyanate, wobei sich die Summe der Gew.% der Komponenten A), B), C) und D₁) und D₂) auf 100 Gew.% addiert, sowie
E) 0 bis 10 Gew.% eines oder mehrerer Katalysatoren zur Katalyse der Reaktion von Carboxyl- und Epoxidgruppen, bezogen auf die Summe der Gewichte der Komponenten A) bis D₂).

Gemäß einer bevorzugten Ausführungsform der Erfindung weisen die carboxyfunktionalisierten Poly(meth)acrylcopolymeren, die gemäß Komponente A) mit Lacton umgesetzt werden können, ein Zahlenmittel des Molgewichts (Mn) von 500 bis 10000 g/mol auf. Die entsprechend einsetzbaren carboxyfunktionalisierten Polyester weisen bevorzugt ein errechnetes Molgewicht von 500 bis 2000 g/mol auf. Die Säurezahl dieser Ausgangsmaterialien liegt bei 15 bis 200 mg KOH/g, bevorzugt bei 30 bis 140 mg KOH/g und besonders bevorzugt bei 60 bis 120 mg KOH/g.

Die Erfindung betrifft auch Überzugsmittel, die aus den erfindungsgemäßen Bindemittelzusammensetzungen hergestellt werden können. Es kann sich dabei um wäßrige und/oder lösmittelhaltige Überzugsmittel handeln, die gegebenenfalls Pigmente, Füllstoffe und/oder lackübliche Hilfs- und Zusatzstoffe enthalten können; sie können auch als lösemittel- und wasserfreie Pulverlacke formuliert sein.

In der Komponente A) der erfindungsgemäßen Bindemittel- bzw. Überzugsmittelzusammensetzungen sind die Carboxylgruppen durch Umsetzung mit Lactonen modifiziert. Durch die Anlagerung von Lactonen erfolgt eine "Kettenverlängerung" der Carboxylgruppen. Durch Ringöffnung des anzulagernden Lactons werden die ursprünglich am Poly(meth)acrylatgerüst und/oder am Polyestergerüst befindlichen Carboxylgruppen verestert, wobei jedoch die Lacton-Carboxylgruppen freigesetzt werden und somit Reaktionsprodukte entstehen, die exponierte Carboxylgruppen an dem Lacton entsprechenden kurzen Seitenketten aufweisen.

Bei der Herstellung der carboxylgruppenhaltigen Poly(meth)acrylcopolymeren bzw. Polyester, die zur Bereitung der Komponente A) eingesetzt werden, können die Carboxylgruppen direkt durch Verwendung carboxylgruppenhaltiger Bausteine, beispielsweise beim Aufbau von Polymeren, wie (Meth)acrylcopolymeren, eingeführt werden. Beispiele für hierzu verwendbare geeignete carboxylgruppenhaltige Monomere sind ungesättigte Carbonsäuren, wie z. B. Acryl-, Methacryl-, Itacon-, Croton, Isocroton-, Aconit-, Malein- und Fumarsäure, Halbester der Malein- und Fumarsäure sowie β-Carboxyethylacrylat und Addukte von Hydroxyalkylestern der Acrylsäure und/oder Methacrylsäure mit Carbonsäureanhydriden, wie z. B. der Phthalsäure-mono-2-methacryloyloxyethylester.

In der vorliegenden Beschreibung und den Patentansprüchen wird der Ausdruck (Meth)acryl verwendet. Dieser bedeutet Acryl und/oder Methacryl.

Bei der Herstellung der carboxylgruppenhaltigen (Meth)acrylcopolymere bzw. Polyester ist es aber auch möglich, zunächst ein hydroxy- und gegebenenfalls carboxylgruppenhaltiges Polymer mit einer OH-Zahl von 15 bis 200 mg KOH/g aufzubauen und die Carboxylgruppen ganz oder teilweise in einer zweiten Stufe durch Umsetzen der Hydroxyl- und gegebenenfalls carboxylgruppenhaltigen Polymeren mit Carbonsäureanhydriden einzuführen.

Für die Addition an die hydroxylgruppenhaltigen Polymeren geeignete Carbonsäureanhydride sind die Anhydride von aliphatischen, cycloaliphatischen und aromatischen gesättigten und /oder ungesättigten Di- und Polycarbonsäuren, wie beispielsweise die Anhydride der Phthalsäure, Tetrahydrophthalsäure, Hexahydrophthalsäure, Bernsteinsäure, Maleinsäure, Itaconsäure, Glutarsäure, Trimellithsäure und Pyromellitsäure sowie deren halogenierte oder alkylierte Derivate.

Bevorzugt eingesetzt werden Anhydride der Phthalsäure, Tetrahydro- und Hexahydrophthalsäure sowie 5-Methylhexahydrophthalsäureanhydrid.

Beispiele für geeignete Hydroxylalkylester α,β-ungesättigter Carbonsäuren mit primären Hydroxylgruppen zur Herstellung hydroxyfunktioneller Poly(meth)acrylate sind Hydroxyethylacrylat, Hydroxypropylacrylat, Hydroxybutylacrylat, Hydroxyamylacrylat, Hydroxyhexylacrylat, Hydroxyoctylacrylat und die entsprechenden Methacrylate. Als Beispiele für verwendbare Hydroxyalkylester mit einer sekundären Hydroxylgruppe seien 2-Hydroxypropylacrylat, 2-Hydroxybutylacrylat, 3-Hydroxybutylacrylat und die entsprechenden Methacrylate genannt.

Vorteilhafterweise kann die hydroxylfunktionalisierte Komponente zumindest teilweise ein Umsetzungsprodukt aus einem Mol Hydroxyethylacrylat und/oder Hydroxyethylmethacrylat und durchschnittlich zwei Mol ε-Caprolacton sein.

Als hydroxyfunktionalisierte Komponente kann zumindest teilweise auch ein Umsetzungsprodukt aus Acrylsäure und/oder Methacrylsäure mit dem Glycidylester einer Carbonsäure mit einem tertiären α-Kohlenstoffatom eingesetzt werden. Glycidylester stark verzweigter Monocarbonsäuren sind unter dem Handelsnamen "Cardura" erhältlich. Die Umsetzung der Acrylsäure oder Methacrylsäure mit dem Glycidylester einer Carbonsäure mit einem tertiären α-Kohlenstoff kann vor, während oder nach der Polymerisationsreaktion erfolgen.

Bei der Herstellung der (Meth)acrylcopolymeren können neben den vorstehend genannten Monomeren auch weitere ethylenisch ungesättigte Monomere verwendet werden. Die Auswahl der weiteren ethylenisch ungesättigten Monomeren ist nicht kritisch. Es muß nur darauf geachtet werden, daß der Einbau dieser Monomeren nicht zu unerwünschten Eigenschaften des Copolymerisats führt.

Als weitere ethylenisch ungesättigte Komponente geeignet sind insbesondere Alkylester der Acryl- und Methacrylsäure, wie z. B. Methyl(meth)acrylat, Ethyl(meth)acrylat, Propyl(meth)acrylat, Butyl(meth)acrylat, Isopropyl(meth)acrylat Isobutyl(meth)acrylat, Pentyl(meth)acrylat, Hexyl(meth)acrylat, Cyclohexyl(meth)acrylat, 2-Ethylhexyl(meth)acrylat, Octyl(meth)acrylat, 3,5,5-Trimethylhexyl(meth)acrylat, Decyl(meth)acrylat, Dodecyl(meth)acrylat, Hexadecyl(meth)acrylat, Octadecyl(meth)acrylat und Octadecenyl(meth)acrylat. Ebenfalls möglich ist die Verwendung von Silanmodifizierten Monomeren, wie z.B. gamma-Methacryloxypropyltrimethoxysilan oder gamma-Methacryloxypropyl-tris(2-methoxy-ethoxy)-silan.

Statt der vorstehend genannten Alkylester der Acryl- und Methacrylsäure oder zusammen mit diesen Alkylestern können zur Herstellung von (Meth)acrylcopolymerisaten weitere ethylenisch ungesättigte Monomere eingesetzt werden, wobei sich die Auswahl dieser Monomeren weitgehend nach den gewünschten Eigenschaften der Überzugsmittel in bezug auf Härte, Elastizität, Verträglichkeit und Polarität richtet.

Beispiele für weitere, geeignete ethylenisch ungesättigte Monomere sind die Alkylester der Malein-, Fumar-, Tetrahydrophthal-, Croton-, Isocroton-, Vinylessig- und Itaconsäure, wie z. B. entsprechenden Methyl-, Ethyl, Propyl, Butyl, Isopropyl-, Isobutyl-, Pentyl-, Amyl-, Isoamyl-, Hexyl-, Cyclohexyl-, 2-Ethylhexyl-, Octyl-, 3,5,5-Trimethylhexyl-, Decyl- Dodecyl-, Hexadecyl-, Octadecyl- und Octadecenylester.

Weiterhin können auch kleine Anteile Monomere mit mindestens zwei polymerisierbaren, olefinisch ungesättigten Doppelbindungen eingesetzt werden. Bevorzugt liegt der Anteil dieser Monomeren unter 5 Gew.%, bezogen auf das Gesamtgewicht der Monomeren.

Beispiele für derartige Verbindungen sind Hexandioldiacrylat, Hexandioldimethacrylat, Ethylenglykoldiacrylat, Ethylenglykoldimethacrylat, Butandioldiacrylat, Butandioldimethacrylat, Hexamethylenbismethacrylamid, Trimethylolpropantriacrylat, Trimethylolpropantrimethacrylat und ähnliche Verbindungen.

Eine weitere geeignete Komponente ist eine monovinylaromatische Verbindung. Vorzugsweise enthält sie 8 bis 9 Kohlenstoffatome je Molekül. Beispiele für geeignete Verbindungen sind Styrol, Vinyltoluole, α-Methylstyrol, Chlorstyrole, o-, m- oder p-Methylstyrol, 2,5-Dimethylstyrol, p-Methoxystyrol, p-tert.-Butylstyrol, p-Dimethylaminostyrol, p-Acetamidostyrol und m-Vinylphenol. Bevorzugt werden Vinyltoluole sowie insbesondere Styrol eingesetzt.

Bei den zur Herstellung der Komponente A) eingesetzten carboxylgruppenhaltigen Polymeren handelt es sich um carboxylgruppenhaltige Copolymerisate und/oder carboxylgruppenhaltige Polyester. Die carboxylgruppenhaltigen Polyester können nach den üblichen Methoden (vgl. z. B. B. Vollmert, Grundriß der makromolekularen Chemie, E. Vollmert-Verlag Karlsruhe 1982, Band II, Seite 5 ff.) aufgebaut werden aus aliphatischen und/oder cycloaliphatischen Di-, Tri- oder höherwertigen Alkoholen, gegebenenfalls zusammen mit einwertigen Alkoholen und aus aliphatischen, aromatischen und/oder cycloaliphatischen Carbonsäuren sowie höherwertigen Polycarbonsäuren. Beispiele für geeignete Alkohole sind Ethylenglykol, 1,2-Propandiol, 1,3-Propandiol, 2,2-Dimethyl-1,3-propandiol, 1,2-Butandiol, 1,3-Butandiol, 1,4-Butandiol, 1,5-Pentandiol, 3-Methyl-1,5-pentandiol, 1,6-Hexandiol, 2-Ethyl-1,6-hexandiol, 2,2,4-Trimethyl-1,6-hexandiol, 1,4-Dimethylolcyclohexan, Glycerin, Trimethylolethan, Trimethylolpropan, Pentaerythrit, Veretherungsprodukte von Diolen und Polyolen, z. B. Di- und Triethylenglykol, Polyethylenglykol, Neopentylglykolester von Hydroxypivalinsäure.

Beispiele für geeignete Carbonsäuren sind Adipin-, Azelain-, 1,3- und 1,4-Cyclohexandicarbonsäure, Tetrahydrophthal-, Hexahydrophthal-, Endomethyltetrahydrophthalsäure, Isophthalsäure, o-Phthalsäure, Terephthalsäure bzw. deren Anhydride sowie deren veresterungsfähige Derivate.

Die errechneten Molgewichte der Polyester liegen zwischen 500 und 2000 g/mol.

Die zur Herstellung der Komponente A) verwendbaren carboxyfunktionellen Poly(meth)acrylcopolymerisate und Polyester werden mit einem Lacton "kettenverlängert". Die Lactone (zyklische Ester) lagern sich an Carboxylgruppen an, wobei der Ring geöffnet wird und eine neue endständige Carboxylgruppe entsteht. Ein Beispiel für ein besonders bevorzugtes Lacton ist das epsilon-Caprolacton.

Beispiele für andere Lactone sind gamma-Butyrolacton und Lactone, wie beta-Propiolacton delta-Valerolacton, delta-Butyrolacton, zeta-Enantholacton, eta-Caprylolacton. Derartige Lactone können substituiert sein; Beispiele hierfür sind 6-Methyl-epsilon-caprolacton, 3-Methyl-epsilon-caprolacton, 5-Methyl-epsilon-caprolacton, 5-Phenol-epsilon-caprolacton, 4-Methyl-delta-valerolacton, 3,5-Dimethyl-epsilon-caprolacton, und Mischungen davon.

Die Umsetzung mit dem Lacton kann beispielsweise unmittelbar im Anschluß an die Harzsynthese, d. h. an die Synthese des Poly(meth)acrylpolymerisats und/oder des Polyesters erfolgen. Die Reaktion erfolgt beispielsweise bei erhöhter Temperatur, beispielsweise bei Temperaturen bis zu 100°C. Die Reaktion kann beispielsweise unter Rühren beispielsweise bis zu 10 Stunden durchgeführt werden.

Die erfindungsgemäße Bindemittelzusammensetzung, bzw. die erfindungsgemäßen Überzugsmittel enthalten als Komponente B) eine oder mehrere epoxidfunktionalisierte Verbindungen mit mindestens zwei Epoxidfunktionen im Molekül, mit einem Zahlenmittel des Molgewichtes (Mn) von 200 bis 10000 g/mol.

Beispiele hierfür sind übliche Di- oder Polyepoxide, z. B. Polyglycidylether auf Basis von Diethylenglykol, Dipropylenglykol, Polypropylenglykol mit einem Zahlenmittel des Molgewichtes Mn bis 2000, Triglycidylether von Glycerin und/oder Di- oder Polyphenolen wie Bisphenol A.

Weitere Beispiele für Di- oder Polyepoxide sind solche auf der Basis von Di- oder Polyglycidylestern. Beispiele hierfür sind Umsetzungsprodukte aus 1-Hydroxy-2,3-epoxypropan mit Phthal- oder Terephthalsäure zu Phthal- oder Terephthalsäure-bis(2,3-epoxypropylester) oder einem Diglycidylether von Bisphenol A mit Trimellithsäureanhydrid zu Polyestern mit einem Zahlenmittel des Molekulargewichtes Mn von 500-2000.

Ebenfalls verwendbare Beispiele sind Glycidyl-funktionalisierte (Meth)acrylcopolymere. Beispiele hierfür sind Copolymere von Glycidyl(meth)acrylat oder 2,3-Epoxycyclopentylacrylat. Als Comonomere können Ester der (Meth)acrylsäure, wie z. B. Methyl-, Ethyl-, Butyl-, Isobutyl-, Ethylhexyl-, Cyclohexyl- und/oder Lauryl(meth)acrylat gewählt werden, hydroxyfunktionalisierte Ester der (Meth)acrylsäure wie z. B. Hydroxyethyl- und/oder Hydroxypropylester, weiterhin auch Styrol, Vinyltoluol und/oder α-Methylstyrol. Das Zahlenmittel des Molgewichtes (Mn) kann zwischen 1000-10000 liegen, bevorzugt bei 2000-5000. Weitere copolymerisierbare Glycidylmonomere sind z.B. (Meth)allylglycidylether oder 3,4-Epoxy-1-vinylcyclohexan. Die Herstellung der Copolymere erfolgt über radikalische Lösungspolymerisation, sie ist dem Fachmann bekannt und bedarf keiner weiteren Erläuterung.

Es ist auch möglich, die Bindemittelkomponenten A und B zumindest teilweise in einem weiteren Reaktionsschritt zu präkondensieren. Dies kann z.B. dadurch erfolgen, daß man die Komponenten A und B gemeinsam erhitzt. Den gewünschten Kondensationgrad kann man beispielsweise an der Verringerrung der Säurezahl ermitteln. Beispielsweise ist es möglich, unter Rühren, auf Temperaturen von beispielsweise 80 bis 120°C zu erhitzen und so lange weiterzurühren, bis die Säurezahl der Mischung um beispielsweise 2 bis 5 mg KOH/g Festharz gefallen ist. Selbstverständlich ist es auch möglich, die Säurezahl weiter zu reduzieren, dabei sollte jedoch darauf geachtet werden, daß die Viskosität der Mischung nicht bis zum Gelieren ansteigt. Durch die Präkondensation der Komponenten A) und B) kann die Lagerstabilität der Zusammensetzungen weiter erhöht werden.

Ebenfalls möglich ist es, die Bindemittelkomponenten B und C zumindest teilweise zu präkondensieren. Hierzu ist es beispielsweise möglich einen Teil oder das gesamte hydroxyfunktionelle Polyol der Komponente C gegebenenfalls mit einem oder mehreren organischen Lösemitteln vorzulegen und darin die zur Herstellung der epoxidfunktionellen Komponente B benötigten Monomeren oder einen Teil davon, umzusetzen. Beispielsweise können die hydroxyfunktionellen Polyole C, gegebenenfalls mit Lösemittel, vorgelegt und erwärmt werden, beispielsweise auf Temperaturen in der Größenordnung von 140 °C. Die zur Herstellung der epoxidfunktionellen Komponente B benötigten Monomeren können, gegebenenfalls zusammen mit Initiatoren, zudosiert werden, beispielsweise während eines Zeitraums von bis zu 5 Stunden. Bei dieser Verfahrensweise wird als Polyol-Komponente C, wie sie nachstehend noch genauer definiert wird, bevorzugt ein Polyesterpolyol verwendet, insbesondere ein solches mit einem Zahlenmittel des Molekulargewichts Mn von 500 bis 2000, bevorzugt mit einer Säurezahl unter 3 mg KOH/g und bevorzugt mit einer OH-Zahl von 15 bis 200 mg KOH/g. Ein derartiges Präkondensat (Schoßpolymerisat) aus B und C kann gegenüber einer Mischung aus B und C Vorteile besitzen, wie beispielsweise eine bessere Verträglichkeit und eine homogenere Vermischung.

Die erfindungsgemäße Bindemittelzusammensetzung bzw. die erfindungsgemäßen Überzugsmittel können ein oder mehrere Polyole mit mindestens zwei Hydroxylfunktionen im Molekül als Komponente C) enthalten. Diese Polyole können beispielsweise ausgewählt werden aus
a) Polyolen aus der Gruppe von geraden oder verzweigten Alkan-di- und Polyolen mit 2 bis 12 Kohlenstoffatomen, oder
b) hydroxylgruppenhaltigen Poly(meth)acrylaten oder Poly(meth)acrylamiden auf der Basis von (Meth)acrylsäurehydroxyalkylestern mit 2 bis 12 Kohlenstoffatomen im Alkylteil oder (Meth)acrylsäure-hydroxyalkylamiden mit 2 bis 12 Kohlenstoffatomen im Alkylteil, gegebenenfalls copolymerisiert mit α,β-ungesättigten Monomeren, mit einem Zahlenmittel des Molekulargewichts Mn von 1000 bis 10000, oder
c) hydroxylgruppenhaltigen Poly(meth)acrylaten auf der Basis von (Meth)acrylsäurehydroxyalkylestern mit 2 bis 12 Kohlenstoffatomen im Alkylteil und gegebenenfalls copolymerisierbaren α,β-ungesättigten Monomeren, die mit cyclischen Estern von Hydroxycarbonsäuren mit 4 bis 6 Kohlenstoffatomen modifiziert sind, mit einem Zahlenmittel des Molekulargewichts Mn von 1000 bis 10000, oder
d) Polyester-Polyolen oder Polyether-Polyolen jeweils mit einem Zahlenmittel des Molekulargewichts Mn von 500 bis 2000.

Beispiele für Alkan-di- und -polyole der Gruppe a) sind solche mit geraden und verzweigten Ketten mit 2 bis 12 Kohlenstoffatomen. Sie enthalten mindestens zwei Hydroxyfunktionen, vorzugsweise jedoch mindestens drei.

Beispiele hierfür sind Propandiol, Butandiol, Hexandiol, Glycerin, Trimethylpropan und Pentaerythrit.

Beispiele für hydroxylgruppenhaltige Poly(meth)acrylate b) auf der Basis von (Meth)acrylsäurehydroxylalkylestern mit 2 bis 12 Kohlenstoffatomen im Alkylteil sind Hydroxylalkylester der Acrylsäure oder Methacrylsäure mit Alkoholen mit mindestens zwei Hydroxylgruppen, wie 1,4-Butandiol-mono(meth)acrylat 1,6-Hexandiol-mono(meth)acrylat oder 1,2,3-Propantriol-mono(meth)acrylat. Beispiele für hydroxylgruppenhaltige Poly(meth)acrylamide b) auf der Basis von (Meth)acrylsäurehydroxyalkylamiden sind Amide der Acrylsäure oder Methacrylsäure mit Hydroxyalkylaminen oder Di(hydroxyalkyl)aminen mit jeweils 2 bis 12 Kohlenstoffatomen im Alkylteil, die eine oder mehrere Hydroxylgruppen aufweisen können, wie Acrylsäurehydroxyethylamid.

Die hydroxylgruppenhaltigen Poly(meth)acrylate der Komponente b) können Homo- oder Copolymerisate sein. Sie weisen Zahlenmittel des Molekulargewichts (Mn) von 1000 bis 10000, bevorzugt von 3000 bis 6000 g/mol auf. Copolymerisierbare Monomere zur Herstellung der Copolymerisate sind α,β-ungesättigte Monomere, radikalisch polymerisierbare Monomere aus der Gruppe der Ester von α,β-ungesättigten Carbonsäuren, wie Acrylsäure oder Methacrylsäure, wobei Beispiele für die Alkoholkomponente Methyl-, Ethyl-, Propyl-Alkohol und deren Isomere und höhere Homologe sind. Weitere Beispiele sind Diester der Malein- oder Fumarsäure, wobei die Alkoholkomponente die gleiche wie vorstehend erwähnt ist. Weitere Beispiele sind vinylaromatische Verbindungen, wie Styrol, α-Methylstyrol und Vinyltoluol. Weitere Beispiele sind Vinylester kurzkettiger Carbonsäuren. wie Vinylacetat, Vinylpropionat und Vinylbutyrat.

Die hydroxylgruppenhaltigen Poly(meth)acrylate der vorstehend definierten Komponente c) können modifizierte Poly(meth)acrylat-homo- und -copolymere sein, wie sie unter b) beschrieben werden, deren Hydroxylgruppen ganz oder partiell mit cyclischen Estern, wie z. B. von Hydroxycarbonsäure mit 4 bis 6 Kohlenstoffatomen, wie gamma-Butyrolacton oder epsilon-Caprolacton umgesetzt sein können. Die erhaltenen modifizierten Poly(meth)acrylate der Komponente c) weisen ein Zahlenmittel des Molekulargewichts Mn von 1000 bis 10000 auf.

Beispiele für die Polyesterpolyole und Polyetherpolyole der Komponente d) sind solche mit einem Zahlenmittel des Molekulargewichts Mn von 500 bis 2000 g/mol. Spezielle Beispiele sind Umsetzungsprodukte von Di- bzw. Tricarbonsäuren, wie Adipinsäure oder Trimellithsäure, mit Polyolen, wobei die Polyole im Überschuß vorliegen. Weitere Beispiele sind Umsetzungsprodukte von Di- oder Triolen, wie Propandiol, Butandiol oder Glycerin, mit Ethylenoxid oder Propylenoxid.

Die erfindungsgemäße Bindemittelzusammensetzung bzw. die erfindungsgemäßen Überzugsmittel können als Komponente D₁) gegebenenfalls einen oder mehrere Vernetzer, insbesondere Melaminharze, enthalten. Beispiele hierfür sind in Wasser unlösliche butanol- oder isobutanolveretherte Melamine wie z. B. die Handelsprodukte Setamin ^{R} US 138 oder Maprenal ^{R} MF 610; mischveretherte Melamine, die sowohl butanol- als auch methanolverethert sind, wie z. B. Cymel ^{R} 254, sowie Hexamethyloxymethylmelamin (HMM-Melamine) wie z. B. Cymel ^{R} 301 oder Cymel ^{R} 303, wobei letzteren zur Vernetzung gegebenenfalls ein Säurekatalysator wie z. B. p-Toluolsulfonsäure zugesetzt werden kann.

Weitere Beispiele für Aminharzvernetzer sind übliche hydrophile und damit wasserlösliche bzw. -verträgliche Melaminharze, wie z. B. methylveretherte Melamine wie z. B. Cymel ^{R} 325, Cymel ^{R} 327, Cymel ^{R} 350 und Cymel ^{R} 370, Maprenal ^{R} MF 927.

Die erfindungsgemäßen Überzugsmittel können als Vernetzer (Komponente D₂) ein oder mehrere verkappte Polyisocyanate enthalten. Beispiele für den verkappten Polyisocyanate zugrunde liegende einsetzbare Polyisocyanate sind cycloaliphatische, aliphatische oder aromatische Polyisocyanate wie Tetramethylen-diisocyanat, Hexamethylendiisocyanat, 2,2,4-Trimethylendiisocyanat, 1,12-Dodecandiisocyanat, Cyclohexan-1,3- und 1,4-diisocyanat, 1-Isocyanato-3,3,5-trimethyl-5-isocyanato-methylcyclohexan (=Isophorondiisocyanat IPDI), Perhydro-2,4'- und/oder -4,4'-diphenylmethandiisocyanat, 1,3- und 1,4-Phenylendiisocyanat, 2,4- und 2,6-Toluylendiisocyanat, Diphenylmethan-2,4'- und/oder -4,4'-diisocyanat, 3,2'- und/oder 3,4-Diisocyanato-4-methyl-diphenylmethan, Naphthylen-1,5-diisocyanat, Triphenylmethan-4,4',4'' -triisocyanat, Tetramethylxylylendiisocyanat oder Gemische dieser Verbindungen.

Neben diesen einfachen Isocyanaten sind auch solche geeignet, die Heteroatome in dem die Isocyanatgruppen verknüpfenden Rest enthalten. Beispiele hierfür sind Carbodiimidgruppen, Allophanatgruppen, Isocyanuratgruppen, Urethangruppen, acylierte Harnstoffgruppen und Biuretgruppen aufweisende Polyisocyanate.

Besonders gut für die Erfindung geeignet sind die bekanten Polyisocyanate, die hauptsächlich bei der Herstellung von Lacken eingesetzt werden, z.B. Biuret-, Isocyanurat- oder Urethangruppen aufweisende Modifizierungsprodukte der oben genannten einfachen Polyisocyanate, insbesondere Tris-(6-Isocyanatohexyl)-biuret oder niedermolekulare, Urethangruppen aufweisende Polyisocyanate, wie sie durch Umsetzung von im Überschuß eingesetzten IPDI mit einfachen mehrwertigen Alkoholen des Molekulargewichtsbereiches 62 - 300, insbesondere mit Trimethylolpropan erhalten werden können. Selbstverständlich können auch beliebige Gemische der genannten Polyisocyanate zur Herstellung der erfindungsgemäßen Produkte eingesetzt werden.

Geeignete Polyisocyanate sind ferner die bekannten, endständige Isocyanatgruppen aufweisende Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanatgruppen reaktionsfähigen Gruppen zugänglich sind. Als solche kommen bevorzugt insgesamt mindestens zwei Aminogruppen und/oder Hydroxylgruppen aufweisende Verbindungen mit einem Zahlenmittel der Molmasse von 300 bis 10000, vorzugsweise 400 bis 6000, zur Anwendung.

In diesen bekannten Prepolymeren entspricht das Verhältnis von Isocyantgruppen zu gegenüber NCO reaktiven Wasserstoffatomen 1,05 bis 10 : 1, vorzugsweise 1,1 bis 3 : 1, wobei die Wasserstoffatome vorzugsweise aus Hydroxylgruppen stammen.

Die Art und Mengenverhältnisse der bei der Herstellung von NCO-Prepolymeren eingesetzten Ausgangsmaterialien werden im übrigen vorzugsweise so gewählt, daß die NCO-Prepolymeren a) eine mittlere NCO-Funktionalität von 2 bis 4, vorzugsweise von 2 bis 3 und b) ein Zahlenmittel der Molmasse von 500 - 10000, vorzugsweise von 800 - 4000 aufweisen.

Die Isocyanatgruppierungen der Polyisocyanate sind vollständig verkappt. Als Verkappungsmittel können übliche Verkappungsmittel verwendet, wie sie beispielsweise auf dem Lacksektor eingesetzt werden. Beispiele für verwendbare Verkappungsmittel sind Malonsäuredimethylester, Malonsäurediethylester, Acetessigsäureethylester, epsilon-Caprolactam, Acetanilid, Acetylaceton, Acetono xim, Propandiol-1.2 und/oder Butanonoxim, wobei das zuletzt genannte Verkappungsmittel bevorzugt ist.

Die Verkappung der Polyisocyanate kann z.B. durch Erwärmen ein oder mehrerer Polyisocyanate mit dem Verkappungsmittel erfolgen. Beispielsweise können ein oder mehrere Polyisocyanate vorgelegt und unter Rühren erhitzt werden, z.B. auf etwa 80°C, und das Verkappungsmittel (beispielsweise während etwa 10 min.) zudosiert werden. Es wird solange gerührt, bis die NCO-Zahl kleiner als 0,1 % beträgt. Es ist auch möglich, ein oder mehrere Polyisocyanate mit einem Gemisch aus zwei oder mehreren Verkappungsmitteln zu verkappen.

Der Vorteil der Verwendung von zwei oder mehreren unterschiedlichen Polyisocyanaten und/oder zwei oder mehreren unterschiedlichen Verkappungsmitteln liegt darin, daß hiermit die Vernetzung über einen weiten Temperaturbereich erfolgen kann.

Die erfindungsgemäße Bindemittelzusammensetzung und damit die erfindunsgemäßen Überzugsmittelzusammensetzungen enthalten einen oder mehrere Katalysatoren (Komponente E). Es handelt sich insbesondere um in organischen Lösemitteln oder in Wasser lösliche oder mit organischen Materialien mischbare Katalysatoren. Beispiele für geeignete in organischen Lösemitteln oder mit organischen Materialien mischbare Katalysatoren sind Phosphoniumsalze, wie beispielsweise Ethyltriphenylphosphoniumacetat, -phosphat, -chlorid, -bromid, -jodid, Butyltriphenylphosphoniumacetat, -phosphat, -chlorid, -bromid, -jodid, Benzyltriphenylphosphoniumacetat, -phosphat, -chlorid, -bromid, -jodid und die quaternären Ammoniumsalze, wie beispielsweise Alkylbenzyldimethylammoniumchlorid, Benzyltrimethylammoniumchlorid, Methyltrioctylammoniumchlorid, Tetraethylammoniumbromid, N-Dodecylpyridiniumchlorid und Tetraethylammoniumiodid. Die bevorzugten in organischen Lösemitteln löslichen oder mit organischen Materialien mischbaren Katalysatoren sind Ethyltriphenylphosphonium-Acetat, -phosphat, -chlorid, -bromid, Butyltriphenylphosphoniumacetat, -phosphat, -chlorid, -bromid, Benzyltriphenylphosphoniumacetat, -phosphat, -chlorid, -bromid, und Methyltrioctylammoniumchlorid. Ethyltriphenylphosphoniumphosphat kann beispielsweise aus Ethyltriphenylphosphoniumacetat durch Reaktion mit Phosphorsäure erhalten werden. Ein weiteres Katalysatorbeispiel ist p-Toluolsulfonsäure. Es ist auch möglich, das glycidylfunktionalisierte Harz mit p-Toluolsulfonsäure umzusetzen, beispielsweise bei erhöhter Temperatur, bis zu beispielsweise 80°C. Hierbei wird die p-Toluolsulfonsäure unter Oxiran-Öffnung angelagert. Beim Einbrennen des fertigen Lackes wird die p-Toluolsulfonsäure zurückgespalten und kann die Vernetzung COOH-Epoxid katalysieren.

Der in organischen Lösemitteln und/oder Wasser lösliche oder mit organischen Materialien mischbare Katalysator kann in einer Menge von etwa 0 bis etwa 10,0 Gew.%, vorzugsweise von 0,3 bis 2,0 Gew.%, bezogen auf die Summe der Gewichte der Komponenten A) bis D₂) enthalten sein.

Ebenfalls ist es möglich, einen Aminkatalysator mit dem COOH-funktionalisierten (Meth)acrylatharzgemisch zu verknüpfen. Dies geschieht zweckmäßigerweise durch Copolymerisation von tert.- Amino(meth)acrylmonomeren bei der Synthese des COOH-funktionalisierten (Meth)acrylatharzes.

Beispiele für solche Monomere sind Dimethylaminoethyl (meth)acrylat, Diethylaminopropyl(meth)acrylat und Dimethylaminopropyl(meth)acrylat. Der mengenmäßige Anteil dieser (Meth)acrylate liegt bei 0,5 bis 10 Gew.-%, bevorzugt 1 bis 5 Gew.-%, bezogen auf den Gesamtfeststoffgehalt des COOH-funktionalisierten (Meth)acrylatharzes.

Bei der Bereitung der erfindungsgemäßen Bindemittelzusammensetzungen bzw. Überzugsmittelzusammensetzungen werden die Mengenverhältnisse bevorzugt so gewählt, daß zwischen dem carboxylgruppenhaltigen Harz der Komponente A) und der Epoxidkomponente B) ein molares Verhältnis der reaktiven Gruppen von 1:3 bis 3:1 vorliegt und daß bevorzugt zwischen der Summe der Gewichte der Komponenten A) bis C) und dem Gewicht des Melaminharzes der Komponente D₁)ein Gewichtsverhältnis von bis zu 98:2 Gew.% bzw.dem Gewicht der verkappten Isocyanate D₂) ein Gewichtsverhältnis von 60:40 bis 95:5 Gew.% herrscht. Die erfindungsgemäßen Bindemittelzusammensetzungen können zur Herstellung von Überzugsmitteln eingesetzt werden. Sie können Lösemittel enthalten, wie sie beispielsweise für die Herstellung von Überzugsmitteln, beispielsweise Lacken üblich sind. Es kann sich auch um Lösemittel handeln, wie sie bei der Herstellung der Einzelkomponenten verwendet werden.

Wenn die erfindungsgemäßen Überzugsmittel in der Form lösemittelhaltiger Lacke bereitgestellt werden, so haben diese gemäß einer bevorzugten Ausführungsform einen Lösemittelgehalt von 2 bis 60 Gew.-%.

Beispiele für derartige Lösemittel sind organische Lösemittel, wie aliphatische und aromatische Kohlenwasserstoffe, beispielsweise Toluol, Xylol, Gemische aliphatischer und/oder aromatischer Kohlenwasserstoffe, Ester, Ether und Alkohole. Es sind dies lackübliche Lösemittel. Zur Herstellung der Überzugsmittel aus den erfindungsgemäßen Bindemitteln können auch wäßrige Lösungen bereitet werden. Hierzu können gegebenenfalls geeignete Emulgatoren verwendet werden, wie sie auf dem Lacksektor üblich sind.

Die erfindungsgemäßen Bindemittelzusammensetzungen, sowie die erfindungsgemäßen Überzugsmittel können auch in wäßriger Form vorliegen, wobei sie frei von organischen Lösemitteln sind oder nur einen geringeren Anteil an organischen Lösemitteln aufweisen. Zur Herstellung wäßriger Zusammensetzungen ist es beispielsweise möglich, die carboxylhaltige Komponente A) weitgehend von organischen Lösemitteln zu befreien, z. B. durch Destillation, anschließend einen Teil der Carboxylgruppen zu neutralisieren, z. B. mit Basen wie Triethylamin oder Dimethylethanolanin und dann in Wasser, das gegebenenfalls erwärmt ist, zu emulgieren. In dieses Emulgatorharz können dann gegebenenfalls die anderen Harze einemulgiert werden. Dies geschieht z. B. dadurch, daß das Emulgatorharz auf 60-80°C erwärmt und die ebenfalls auf 60-80°C erwärmten Hydroxy- und/oder epoxydfunktionellen Harze in 5-120 Minuten unter Rühren zugefügt werden.

Ebenfalls möglich ist es auch, das weitgehend von Lösemitteln befreite COOH-funktionalisierte Harz mit dem weitgehend vom Lösemittel befreite Epoxidharz zu mischen und in einem Wasser/Emulgator-Gemisch mittels einer Rotor/Stator-Anlage zu emulgieren. Ebenso ist es möglich, die Komponenten getrennt zu emulgieren und die Emulsionen zu mischen.

Die Erfindung betrifft auch ein Verfahren zur Herstellung der erfindungsgemäßen Überzugsmittel, bei dem man eine erfindungsgemäße Bindemittelzusammensetzung in einem oder mehreren organischen Lösemitteln und/oder Wasser, gegebenenfalls nach Teilneutralisation der vorhandenen Carboxylgruppen, löst oder dispergiert und vor oder nach dem Lösen oder Dispergieren mit handelsüblichen Hilfs- und Zusatzstoffen, Pigmenten und/oder Füllstoffen vermischt.

Die erfindungsgemäßen Überzugsmittel können beispielsweise in der Form eines pigmentfreien und füllstofffreien, gegebenenfalls lackübliche Hilfs- und Zusatzstoffe enthaltenden Klarlackes vorliegen.

Zur Herstellung der erfindungsgemäßen Überzugsmittel können Pigmente, Füllstoffe und/oder lackübliche Hilfs- und Zusatzstoffe zugesetzt werden. Es handelt sich dabei um lackübliche Additive, wie sie auf dem Lacksektor geläufig sind. Die Mengen liegen im üblichen, dem Fachmann geläufigen Bereich.

Beispielsweise können die erfindungsgemäßen Überzugsmittel in der Form eines Pigmente, Füllstoffe und/oder lackübliche Hilfs- und Zusatzstoffe enthaltenden Deck- oder Basislackes formuliert sein.

Beispiele für solche Additive sind Pigmente, beispielsweise farbgebende Pigmente wie Titandioxid oder Ruß und Effektpigmente wie Metallschuppenpigmente und/oder Perlglanzpigmente. Die erfindungsgemäß bereitgestellten Bindemittelzusammensetzungen eignen sich auch für Überzugsmittel, die derartige Effektpigmente enthalten. Bevorzugt enthalten sie Effektpigmente zusammen mit farbgebenden Pigmenten oder farbgebende Pigmente zusammen mit Füllstoffen. Weitere Beispiele für Additive sind lackübliche Füllstoffe, wie z. B. Talkum und Silikate, sowie Hilfs- und Zusatzstoffe wie Weichmacher, Lichtschutzmittel, Stabilisatoren und Verlaufsmittel, wie Silikonöle. Diese werden ebenfalls in üblichen, dem Fachmann geläufigen Mengen eingesetzt.

Die aus den erfindungsgemäßen Bindemitteln hergestellten Überzugsmittel sind für Überzüge geeignet, die auf einer Vielzahl von Substraten haften, wie beispielsweise Holz, Textilien, Kunststoff, Glas, Keramik und insbesondere Metall.

Das erfindungsgemäße Überzugsmittel kann nach bekannten Verfahren, wie z. B. Spritzen, Tauchen, Rollen oder Rakeln appliziert werden. Dabei wird auf das gegebenenfalls schon mit weiteren Lackschichten versehene Substrat der Decklacküberzug aufgetragen. Nach einer Abdunstphase wird das applizierte Überzugsmittel durch Erwärmen vernetzt. Die Einbrenntemperaturen liegen bei 20 bis 180°C, bevorzugt bei 60 bis 150°C. Die Schichtdicke des eingebrannten Films beträgt ca. 15 bis 60 µm. Dabei entsteht ein vernetzter harter, glänzender sowie säurebeständiger Lacküberzug.

Eine bevorzugte Ausführungsform ist die Applikation des erfindungsgemäßen Überzugsmittels als Klarlacküberzug auf einen Basislack, bevorzugt einen wäßrigen Basislack. Dabei kann naß-in-naß gearbeitet werden, oder der Basislack wird vorher durch Erwärmen getrocknet. Dabei entsteht eine besonders gute Haftung der beiden Schichten.

Mit den erfindungsgemäß pigmentfrei als Klarlacke formulierten Überzugsmitteln können beispielsweise Basislacke überlackiert werden, die übliche Decklackpigmente enthalten können; bevorzugt enthalten sie Effektpigmente, wie z. B. Metallic-Pigmente. Als Bindemittelbasis des Basislacks werden bevorzugt Polyester, Polyurethan- oder Acrylatharze eingesetzt. Diese Bindemittel können gegebenenfalls über Vernetzer, z. B. Melamin- oder Isocyanatderivate, vernetzt werden.

Im Folgenden werden einige Beispiele für weitere Basislacke aufgeführt, die bevorzugt mit erfindungsgemäß bereiteten pigmentfreien Klar- oder pigmenthaltigen Decklacken beschichtet werden können.

Wasserbasislacke auf der Basis von 5 bis 95 Gew.% eines wäßrigen epoxidfunktionalisierten Emulsionspolymerisats und 95 bis 5 Gew.% einer anionischen Polyurethandispersion mit einer Säurezahl von 5 bis 10 mg KOH/g. Als Anreibeharze für in solchen Wasserbasislacken verwendete Pigmente und Additive eignen sich besonders Poly(meth)acrylatharze (beispielsweise in einer Menge bis zu 20 Gew.%). Beispiele für solche Wasserbasislacke sind in der DE-A-36 28 124 beschrieben.

Basislacke auf der Basis von Polyestern mit einer Glasübergangstemperatur von > 30°C, Melaminharzen (z. B. partiell butylierten Melaminharzen), Polyharnstoffplastifizierern (beispielsweise auf der Basis eines Addukts aus Butylurethan und Formaldehyd) und einem Copolymer aus Polyethylen (85 Gew.%) - Vinylacetat (15 Gew.%) als Wachsdispersion. Solche Basislacke können übliche Additive, wie Celluloseacetobutyrat (beispielsweise mit unterschiedlichen Molekular-Gewichtsbereichen) enthalten. Beispiele für solche Basislacke sind in der EP-A-187 379 beschrieben.

Ein Beispiel für Basislacke auf Lösemittelbasis, die besonders für Reparaturzwecke geeignet sind, enthält physikalisch trocknende Bindemittel auf der Basis von thermoplastischem Polyester- und/oder Acrylharz im Gemisch mit Celluloseethern bzw. Celluloseestern und/oder Polyvinylacetaten. Ferner enthalten sind selbsthärtende Acrylharzbindemittel, die Farbpigmente enthalten und mit Isocyanat reagierende Wasserstoffatome aufweisen sowie zusätzlich Gemische von in Lösemitteln gelösten Celluloseethern und/oder Celluloseestern und/oder Cellulosehalbestern. Solche Lacke sind z. B. in der DE-OS 29 24 632 beschrieben.

Sämtliche der vorstehenden Basislackformulierungen können übliche Lackadditive enthalten, sowie übliche Füllstoffe und farbgebende Pigmente sowie auch Metallpigmente, wie Aluminium- bzw. Edelstahlbronzen und andere Effektpigmente.

Beispiele für Basislacke, die mit Klarlacken auf der Basis erfindungsgemäßer Überzugsmittel beschichtet werden können, sind auch Pulverlacke, wie sie beispielsweise in "Products Finishing", April 1976,

Seiten 54 bis 56 beschrieben sind. Es ist auch möglich, den Lack zu erwärmen und heiß zu applizieren, beispielsweise auf 60 bis 100 °C. Hierdurch kann der Lack mit hohem Verarbeitungsfestkörper appliziert werden, da durch das Erwärmen die Viskosität reduziert wird.

Es ist auch möglich, den Lack mit überkritischem Kohlendioxid als Lacklösemittel zu versetzen und nach dem sogenannten Unicarb-Verfahren, wie es beispielsweise in der EP-A-0 321 607 und in der EP-A-0 388 927 beschrieben ist, zu applizieren.

Die erfindungsgemäßen Überzugsmittel können auch als Basislacke, sowie auch als Füller formuliert werden. Sie eignen sich dann besonders gut zur Herstellung von Mehrschichtlackierungen, z. B. auf dem Kraftfahrzeugsektor. Zur Formulierung als Basislacke oder Füller können übliche Additive, wie sie z. B. vorstehend für Basislack beschrieben wurden, zugesetzt werden.

Im Vergleich mit üblichen Basislacken ergeben die erfindungsgemäßen Basislacke insbesondere Überzüge mit einer verbesserten Feucht-Warm-Beständigkeit.

Die erfindungsgemäßen Basislacke können mit üblichen Klarlacken, naß-in-naß, gegebenenfalls nach kurzer Antrocknung, überlackiert werden. Bevorzugt werden sie mit Klarlacken auf der Basis der erfindungsgemäßen Überzugsmittel überlackiert.

Die erfindungsgemäßen Überzugsmittel eignen sich besonders für Decklacke oder Klarlacke und Basislacke, die bevorzugt auf dem Kraftfahrzeugsektor, jedoch auch auf anderen Gebieten, eingesetzt werden. Die Verwendung des erfindungsgemäßen Überzugsmittels in der Mehrschichtlackierung ist besonders für die Automobilserien-Lackierung geeignet, sie kann jedoch auch für andere Zwecke verwendet werden, wie z. B. für Haushaltsgeräte oder in der Möbelindustrie, um besonders säurestabile Überzüge zu erhalten.

Die Erfindung betrifft daher auch die Verwendung der erfindungsgemäßen Überzugsmittel in pigmenthaltiger Form zur Herstellung von ein- oder mehrschichtigen Lackierungen. Sie betrifft auch die Verwendung der Überzugsmittel in pigmentfreier Form zur Herstellung von Klarlackschichten oder in pigmenthaltiger Form zur Herstellung von Basislackschichten. Sie betrifft auch die Verwendung der Überzugsmittel zur Herstellung von Füllerschichten und/oder Basislackschichten und/oder Klarlackschichten in Mehrschichtlackierungen, insbesondere auf dem Kraftfahrzeugsektor. In den folgenden Beispielen beziehen sich Teile (T) und % auf das Gewicht.

### Beispiel 1

### Herstellung eines carboxyfunktionellen Harzes

In einem 4-Liter-Dreihalskolben, der mit Rührer, Thermometer, Tropftrichter und einem Rückflußkühler versehen ist, werden 1375 T Xylol vorgelegt und unter Rühren auf Rückflußtemperatur (ca. 140°C) erhitzt. Innerhalb von 5 h wird eine Mischung aus
264 T Acrylsäure
292 T Styrol
294 T Butylacrylat
470 T Butylmethacrylat und
55 T Tert.-Butylperbenzoat
zugetropft und 4 Stunden nachpolymerisiert.

Das carboxylfunktionelle Harz hat einen Festkörpergehalt von 49,5 % (1 h, 150°C), eine Säurezahl von 151 mg KOH/g und eine Viskosität von >20000 mPas (25°C).

### Beispiel 2

### Kettenverlängerung mit epsilon-Caprolacton (Komponente A)

Nach beendigter Nachpolymerisation des Produkts von Beispiel 1 werden innerhalb 30 Minuten 334 T epsilon-Caprolacton zu 2750 T des carboxyfunktionellen Harzes aus Beispiel 1 getropft. Die Umsetzung wird bei 140°C bis zum Erreichen des theoretischen Festkörpergehaltes durchgeführt.

Das kettenverlängerte carboxylfunktionelle Harz hat einen Festkörpergehalt von 54,5 % (1 h, 150°C), eine Säurezahl von 127 mg KOH/g und eine Viskosität von 4730 mPas (25°C).

Für die Anwendung in einem wäßrigen Klarlack (Beispiel 6) wird das carboxyfunktionelle Harz im Vakuum auf einen Festkörpergehalt von 86,3 % eingeengt.

### Beispiel 3

### Herstellung eines epoxyfunktionellen Harzes (Komponente B)

In einem 4-Liter-Dreihalskolben, der mit Rührer, Thermometer, Tropftrichter und einem Rückflußkühler versehen ist, werden 1250 T Xylol vorgelegt und unter Rühren auf Rückflußtemperatur (ca. 140°C) erhitzt. Innerhalb von 5 h wird eine Mischung aus
750 T Glycidylmethacrylat
155 T Styrol
195 T Butylacrylat
100 T Butylmethacrylat und
50 T Tert.-Butylperbenzoat
zugetropft und anschließend 6 h nachpolymerisiert.

Das epoxyfunktionelle Harz hat einen Festkörpergehalt von 49,4 % (1 h, 150°C).

Für die Anwendung in einem wäßrigen Klarlack (Beispiel 6) wird das epoxyfunktionelle Harz im Vakuum auf einen Festkörpergehalt von 82,7 % eingeengt.

### Beispiel 4

### Herstellung von Überzugsmitteln

In den folgenden Beispielen und im Vergleichsversuch wird als Katalysator (Komponente E)
a) eine 33 %ige Lösung von Butyltriphenylphosphoniumchlorid in Ethanol und
b) eine 33 %ige Lösung von Ethyltriphenylphosphoniumchlorid in vollentsalztem Wasser
verwendet.

Als Melaminharz (Komponente D) wird ein handelsübliches methyliertes Melaminharz (Cymel 325/80^{R}) verwendet.

### Beispiel 5

### Herstellung einer Klarlackzusammensetzung

Zur Herstellung einer Klarlackzusammensetzung wird folgende Rezeptur verwendet
56,3 T kettenverlängertes carboxylfunktionelles Harz aus Beispiel 2
31,5 T epoxyfunktionelles Harz aus Beispiel 3
3,9 T Katalysatorlösung aus Beispiel 4a
2,3 T Butyldiglykolacetat
6,0 T Melaminharz

Der Festkörpergehalt der Klarlackzusammensetzung liegt bei 52,3 %.

### Vergleichsversuch

Es wird eine Klarlackzusammensetzung wie in Beispiel 5 hergestellt, wobei jedoch mit einem carboxylfunktionellen Harz gearbeitet wird, das keiner Kettenverlängerung mit epsilon-Caprolacton unterzogen wurde. Es wurde folgende Rezeptur verwendet:
53,9 T carboxyfunktionelles Harz aus Beispiel 1
34,0 T epoxyfunktionelles Harz aus Beispiel 3
3,9 T Katalysatorlösung aus Beispiel 4a
2,2 T Butyldiglykolacetat
6,0 T Melaminharz

Der Klarlack hat einen Festkörpergehalt von 49,5 %.

Mit einer Rakel werden die Klarlacke aus Beispiel 5 und dem Vergleichsversuch in einer Trockenfilmschichtdicke von ca. 40 µm auf ein Eisenblech oder eine Glasplatte appliziert und nach einer 10minütigen Ablüftphase bei Raumtemperatur 20 Minuten bei 140°C eingebrannt.

| Klarlack aus Beispiel 5 | | Klarlack aus dem Vergleichsversuch |
|---|---|---|
| Pendelhärte (König): | 133s | 138s |
| MEK-Rub: | > 100 | < 10 |
| H₂SO₄ (10 %, 65°C): | 20 min | 12 min |
| Aussehen | glänzend | matt |

MEK-Rub stellt einen Reibetest unter Verwendung eines mit Methyl-Ethyl-Keton getränkten Lappens dar.

Der mit dem Klarlack des erfindungsgemäßen Beispiels 5 erhaltene Klarlacküberzug weist eine wesentlich verbesserte Lösmittelbeständigkeit und Säurebeständigkeit im Vergleich mit dem des Vergleichsversuchs auf; zudem ist das Aussehen verbessert.

### Beispiel 6

### Herstellung eines wäßrigen Klarlackes

### a) Herstellung einer wäßrigen Emulsion:

In einem 1-Liter-Kolben werden 128 T einer 10 %igen Lösung eines Emulgators auf der Basis eines Polyoxypropylenpolyoxyethylensorbitansäurediesters und 0,1 T eines handelsüblichen Entschäumers (BYK 022) bei 60°C vorgelegt. Das Gemisch wird mit einem Rührer, der mit einer Geschwindigkeit von ca. 8500 Umdrehungen/min rotiert, gerührt. Innerhalb von 3 Minuten werden bei 60°C ein Gemisch aus 174 T carboxylfunktionellem Harz von Beispiel 2 (Festkörpergehalt: 86,3 %), 92 T epoxyfunktionellem Harz von Beispiel 3 (Festkörpergehalt: 82,7 %) und 31 T Melaminharz sowie 23 T vollentsalztes Wasser zugegeben.

Die erhaltene milchig-weiße Emulsion hat einen Festkörpergehalt von 56,1 %.

### b) Wäßrige Klarlackzusammensetzung

307,6 T Emulsion aus Beispiel 6a
14,0 T Katalysatorlösung aus Beispiel 4b
59,0 T vollentsalztes Wasser

Der wäßrige Klarlack hat einen Festkörpergehalt von 45,3 %. Er wird mit einer Spritzpistole (1,3 mm Düse) in einer Trockenfilmschichtdicke von ca. 40 µm auf blankes Eisenblech bzw. auf mit einer Mehrschichtlackierung mit Elektrotauchgrundierung, Füller und Wasserbasislack beschichtetem Eisenblech appliziert und nach einer 20minütigen Ablüftphase (10 min Raumtemperatur, 10 min 80°C) 20 Minuten bei 140°C eingebrannt.

Eigenschaften der eingebrannten Filme:

| auf Eisenblech | |
|---|---|
| Pendelhärte | 111s |
| im Aufbau | |
| Pendelhärte | 73s |
| MEK-Rub | > 100 |
| H₂SO₄ (10 %, 65°C) | > 20 min |
| Gitterschnitt-Test | Kennwert 0-1 (sehr gut bis gut) |

## Patentansprüche

1. Für Überzugsmittel geeignete Bindemittelzusammensetzung, enthaltend
A) 25 bis 75 Gew.% des Umsetzungsproduktes eines oder mehrerer carboxyfunktionalisierter Poly(meth)acrylcopolymerer und/oder eines oder mehrerer carboxyfunktionalisierter Polyester, jeweils mit einer Säurezahl von 15 bis 200 mg KOH/g, mit einem oder mehreren Lactonen,
B) 25 bis 75 Gew.% eines oder mehrerer epoxidfunktionalisierter Vernetzer mit mindestens zwei Epoxidfunktionen im Molekül, mit einem Zahlenmittel des Molgewichtes (Mn) von 200 bis 10000 g/mol,
C) 0 bis 50 Gew.% eines oder mehrerer Polyole mit mindestens zwei Hydroxylfunktionen im Molekül,
D₁) 0 bis 20 Gew.% eines oder mehrerer Melaminharze,
D₂) 0 bis 40 Gew.% eines oder mehrerer verkappter Polyisocyanate, wobei sich die Summe der Gew.% der Komponenten A), B), C) und D₁) und D₂) auf 100 Gew.% addiert, sowie
E) 0 bis 10 Gew.% eines oder mehrerer Katalysatoren zur Katalyse der Reaktion von Carboxyl- und Epoxidgruppen, bezogen auf die Summe der Gewichte der Komponenten A) bis D₂).

2. Bindemittelzusammensetzung nach Anspruch 1, worin die carboxyfunktionalisierten Poly(meth)acrylcopolymere ein Zahlenmittel des Molgewichts (Mn) von 500 bis 10000 g/mol und die carboxyfunktionalisierten Polyester ein errechnetes Molgewicht von 500 bis 2000 g/mol aufweisen.

3. Bindemittelzusammensetzung nach Anspruch 1 oder 2, worin die Harze der Komponenten A) und B) zumindest teilweise präkondensiert sind.

4. Bindemittelzusammensetzung nach einem der vorhergehenden Ansprüche, dadurch gekennzeichnet, daß die Komponente B ganz oder teilweise in Gegenwart zumindest eines Teils der Komponente C hergestellt wurde.

5. Bindemittelzusammensetzung nach Anspruch 4, dadurch gekennzeichnet, daß es sich bei der Komponente C um einen hydroxyfunktionellen Polyester handelt.

6. Überzugsmittel, enthaltend die Bindemittelzusammensetzung nach einem der Ansprüche 1 bis 5.

7. Überzugsmittel nach Anspruch 6 in Form eines lösemittelhaltigen Lackes.

8. Überzugsmittel nach Anspruch 7 mit einem Lösemittelgehalt von 2 bis 60 Gew.-%.

9. Überzugsmittel nach Anspruch 6, das Wasser und gegebenenfalls ein oder mehrere organische Lösemittel enthält.

10. Überzugsmittel nach Anspruch 6 in der Form eines Pulverlackes.

11. Überzugsmittel nach einem der Ansprüche 6 bis 10 in der Form eines pigmentfreien und füllstofffreien, gegebenenfalls lackübliche Hilfs- und Zusatzstoffe enthaltenden Klarlackes.

12. Überzugsmittel nach einem der Ansprüche 6 bis 10 in der Form eines Pigmente, Füllstoffe und/oder lackübliche Hilfs- und Zusatzstoffe enthaltenden Deck- oder Basislackes.

13. Verfahren zur Herstellung eines Überzugsmittels nach einem der Ansprüche 6 bis 9, 11 und 12, dadurch gekennzeichnet, daß man eine Bindemittelzusammensetzung nach einem der Ansprüche 1 bis 5 in einem oder mehreren organischen Lösemitteln und/oder Wasser, gegebenenfalls nach Teilneutralisation der vorhandenen Carboxylgruppen, löst oder dispergiert und vor oder nach dem Lösen oder Dispergieren mit lacküblichen Hilfs- und Zusatzstoffen, Pigmenten und/oder Füllstoffen vermischt.

14. Verwendung der Überzugsmittel nach einem der Ansprüche 6 bis 10 und 12 in pigmenthaltiger Form zur Herstellung von ein- oder mehrschichtigen Lackierungen.

15. Verwendung der Überzugsmittel nach Anspruch 11 in pigmentfreier Form zur Herstellung von Klarlackschichten.

16. Verwendung der Überzugsmittel nach einem der Ansprüche 6 bis 10 und 11 in pigmenthaltiger Form zur Herstellung von Basislackschichten.

17. Verwendung der Überzugsmittel nach einem der Ansprüche 6 bis 12 zur Herstellung von Füllerschichten und/oder Basislackschichten und/oder Klarlackschichten in Mehrschichtlackierungen.

18. Verwendung der Überzugmittel nach einem der Ansprüche 6 bis 12 zur Herstellung von Mehrschichtlackierungen auf dem Kraftfahrzeugsektor.

## Claims

1. A binder vehicle composition suitable for coating media, containing
A) 25 to 75 % by weight of the reaction product of one or more carboxy-functionalised poly(meth)acrylic copolymers and/or of one or more carboxy-functionalised polyesters, each with an acid number of 15 to 200 mg KOH/g, with one or more lactones,
B) 25 to 75 % by weight of one or more epoxide-functionalised crosslinking agents comprising at least two epoxide functions in their molecule, with a number average molecular weight (Mn) of 200 to 10,000 g/mole,
C) 0 to 50 % by weight of one or more polyols with at least two hydroxyl functions in their molecule,
D₁) 0 to 20 % by weight of one or more melamine resins,
D₂) 0 - 40 % by weight of one or more capped polyisocyanates, wherein the sum of the percentages by weight of components A) , B), C), D₁ and D₂ adds up to 100 % by weight, as well as
E) 0 to 10 % by weight, with respect to the sum of the weights of components A) to D₂), of one or more catalysts for catalysing the reaction of carboxyl and epoxide groups.

2. A binder vehicle composition according to claim 1, wherein the carboxy-functionalised poly(meth)acrylic copolymers have a number average molecular weight (Mn) of 500 to 10,000 g/mole and the carboxy-functionalised polyesters have a calculated molecular weight of 500 to 2000 g/mole.

3. A binder vehicle composition according to claim 1 or 2, wherein the resins of components A) and B) are at least partially precondensed.

4. A binder vehicle composition according to any one of the preceding claims. characterised in that component B was produced, completely or in part, in the presence of at least part of component C.

5. A binder vehicle composition according to claim 4, characterised in that component C is a hydroxy-functionalised polyester.

6. A coating medium containing the binder vehicle composition according to any one of claims 1 to 5.

7. A coating medium according to claim 6 in the form of a solvent-containing lacquer.

8. A coating medium according to claim 7 with a solvent content of 2 to 60 % by weight.

9. A coating medium according to claim 6, which contains water and optionally one or more organic solvents.

10. A coating medium according to claim 6 in the form of a powder coating.

11. A coating medium according to any one of claims 6 to 10 in the form of a pigment-free, extender-free clear lacquer which optionally contains customary lacquer adjuvant substances and additives.

12. A coating medium according to any one of claims 6 to 10 in the form of a covering lacquer or base lacquer which contains pigments, extenders and/or customary lacquer adjuvant substances and additives.

13. A method of producing a coating medium according to any one of claims 6 to 9, 11, and 12, characterised in that a binder vehicle composition according to any one of claims 1 to 5 is dissolved or dispersed, optionally after partial neutralisation of the carboxyl groups present, in one or more organic solvents and/or water, and is mixed, before or after dissolution or dispersion, with customary lacquer adjuvant substances and additives, pigments and/or extenders.

14. The use of the coating media according to any one of claims 6 to 10 in pigment-containing form for the production of single- or multi-layer coatings.

15. The use of the coating media according to claim 11 in pigment-free form for the production of clear lacquer coats.

16. The use of the coating media according to any one of claims 6 to 10 and 11 in pigment-containing form for the production of base lacquer coats.

17. The use of the coating media according to any one of claims 6 to 12 for the production of primer surfacer coats and/or base lacquer coats and/or clear lacquer coats in multi-layer coatings.

18. The use of the coating media according to any one of claims 6 to 12 for the production of multi-layer coatings in the motor vehicle sector.

## Revendications

1. Composition de liant appropriée à des produits de revêtement, qui contient
A) 25 à 75 % en poids du produit de réaction d'un ou plusieurs copolymères poly(méth)acryliques à fonctions carboxy et/ou d'un ou plusieurs polyesters à fonctions carboxy, chacun d'eux à un indice d'acide de 15 à 200 mg de KOH/g, avec une ou plusieurs lactones,
B) 25 à 75 % en poids d'un ou plusieurs agents réticulants à fonctions époxyde, à au moins deux fonctions époxyde par molécule, avec un poids moléculaire moyen, moyenne en nombre, Mn, de 200 à 10 000 g/mole,
C) 0 à 50 % en poids d'un ou plusieurs polyols à au moins deux fonctions hydroxyle dans la molécule,
D₁) 0 à 20 % en poids d'une ou plusieurs résines de mélamine,
D₂) 0 à 40 % en poids d'un ou plusieurs polyisocyanates bloqués, la somme des pourcentages en poids des composants A), B), C) et D₁) et D₂) étant égale à 100 % en poids, et
E) 0 à 10 % en poids d'un ou plusieurs catalyseurs de la réaction entre les groupes carboxyle et les groupes époxyde, par rapport à la somme des poids des composants A) à D₂).

2. Composition de liant selon revendication 1, dans laquelle les copolymères poly(méth)acryliques à fonctions carboxy ont un poids moléculaire moyen, moyenne en nombre, Mn, de 500 à 10 000 g/mole et les polyesters à fonctions carboxy un poids moléculaire calculé de 500 à 2000 g/mole.

3. Composition de liant selon revendication 1 ou 2, dans laquelle les résines des composants A) et B) sont soumises à une condensation préalable au moins partielle.

4. Composition de liant selon une des revendications qui précèdent, caractérisée en ce que le composant B) a été préparé en totalité ou en partie en présence d'une partie au moins du composant C).

5. Composition de liant selon revendication 4, caractérisée en ce que le composant C) est un polyester à fonctions hydroxy.

6. Produit de revêtement contenant la composition de liant selon une des revendications 1 à 5.

7. Produit de revêtement selon revendication 6, sous forme d'une peinture contenant des solvants.

8. Produit de revêtement selon revendication 7, à une teneur en solvants de 2 à 60 % en poids

9. Produit de revêtement selon revendication 6, contenant de l'eau et le cas échéant un ou plusieurs solvants organiques.

10. Produit de revêtement selon revendication 6, sous la forme d'un vernis en poudre.

11. Produit de revêtement selon une des revendications 6 à 10, sous la forme d'un vernis clair exempt de pigment et de matières de charge, mais contenant le cas échéant des produits auxiliaires et additifs usuels dans le domaine des peintures et vernis.

12. Produit de revêtement selon une des revendication 6 à 10, sous la forme d'une peinture de couverture ou d'une peinture de base contenant des pigments, des matières de charge et/ou des produits auxiliaires et additifs usuels dans l'industrie des peintures et vernis.

13. Procédé pour la préparation d'un produit de revêtement selon l'une des revendications 6 à 9, 11 et 12, caractérisé en ce que l'on dissout ou l'on disperse une composition de liant selon une des revendications 1 à 5 dans un ou plusieurs solvants organiques et/ou de l'eau, le cas échéant après neutralisation partielle des groupes carboxyle présents et, avant ou après la dissolution ou dispersion, on mélange avec des produits auxiliaires et additifs usuels pour les peintures et vernis, des pigments et/ou des matières de charge.

14. Utilisation des produits de revêtement selon une des revendications 6 à 10 et 12 à l'état pigmenté pour l'application de revêtements à une ou plusieurs couches.

15. Utilisation des produits de revêtement selon revendication 11 à l'état non pigmenté pour l'application de couches de vernis clair.

16. Utilisation des produits de revêtement selon une des revendications 6 à 10 et 11 à l'état pigmenté pour l'application de couches de peinture de base.

17. Utilisation des produits de revêtement selon une des revendications 6 à 12 pour l'application de couches de mastic et/ou de couches de peinture de base et/ou de couches de vernis clair dans des applications de revêtements à couches multiples.

18. Utilisation des produits de revêtement selon une des revendications 6 à 12 pour l'application de revêtements à couches multiples dans l'industrie des véhicules.
